# EUROPEAN PATENT APPLICATION

(11) **EP 4 531 022 A1**
(43) Date of publication of application: **02.04.2025**
(21) Application number: 24203352.0
(22) Date of filing: 27.09.2024
(51) Int. Cl.: G08G 5/21, G08G 5/22, G08G 5/26

(54) **AIRCRAFT TO AIRPORT LASER COMMUNICATION**

(30) Priority: 28.09.2023 US 202318477305
(71) Applicant: ROSEMOUNT AEROSPACE INC., Burnsville, MN 55306-4898 (US)
(72) Inventor: MANGIO, Anthony, Eden Prairie, 55347 (US)
(74) Representative: Dehns

(57) **Abstract**

Apparatus and associated methods relate to laser communication between an aircraft and an airport ground station. The system includes one or more data collection devices/sensors (303) configured to collect aircraft data. The system further includes an embedded system (304) including a storage device (318), a data buffer (320), and a first laser link transceiver (308). The storage device stores the aircraft data from the one or more data collection devices/sensors. The data buffer receives the aircraft data from the storage device. The first laser link transceiver is mounted on the aircraft and connected to the data buffer to receive the aircraft data from the data buffer. The system further includes a second laser link transceiver (316) mounted on the airport ground station and configured to optically connect directly to the first laser link transceiver and receive the aircraft data therefrom.

## Description

### BACKGROUND

During aircraft operation, aircraft can have data collection capabilities. The data collected by the aircraft or by on-board data collection devices is useful for a variety of applications. In order for such data to be useful, however, the data often needs to be offloaded from the aircraft into an external network. Offloading aircraft data can be time consuming and costly depending on the speed of data transmission and on the various devices required to offload such data, such as satellite technology. As such, a cost-effective solution for high-speed data transmission from an aircraft to a ground-based system is desirable.

### SUMMARY

A system for laser communication between an aircraft and an airport ground station includes one or more data collection devices. The one or more data collection devices are configured to collect aircraft data. The system further includes an embedded system within the aircraft. The embedded system includes one or more processors. The embedded system further includes a first storage device, the first storage device operably connected to the one or more processors, wherein the first storage device is configured to store the aircraft data received from the one or more data collection devices. The embedded system further includes a first data buffer, the first data buffer operably connected to the storage device, wherein the first data buffer is configured to receive the aircraft data from the storage device. The embedded system further includes a first laser link transceiver mounted on the aircraft and operably connected to the data buffer, wherein the first laser link transceiver is configured to receive the aircraft data from the data buffer. The system for laser communication further includes a second laser link transceiver mounted on the airport ground station, wherein the second laser link transceiver is configured to optically connect directly to the first laser link transceiver and receive the aircraft data therefrom.

A method for laser communication between an aircraft and an airport ground station includes uploading aircraft data via an aircraft uploading module within the aircraft, wherein the aircraft data is generated by one or more sensors or by one or more recording devices. The method further includes storing the aircraft data within a first storage device within the aircraft, wherein the first storage device is operably connected to the aircraft uploading module. The method further includes receiving the aircraft data from the storage device at a first data buffer within the aircraft, wherein the first data buffer is operably connected to the storage device. The method further includes receiving the aircraft data from the data buffer at a first laser link transceiver, wherein the first laser link transceiver is mounted on the aircraft and operably connected to the data buffer. The method further includes connecting optically to the first laser link transceiver via a second laser link transceiver, wherein the second laser link transceiver is mounted on the airport ground station. The method further includes receiving the aircraft data from the first laser link transceiver at the second laser link transceiver.

### BRIEF DESCRIPTION OF THE DRAWINGS

FIG. 1 is a perspective view of an aircraft-to-airport communication system.
FIG. 2 is a diagram depicting a process for collecting and transmitting data from an aircraft to an airport.
FIG. 3 is a block diagram depicting an aircraft to airport laser communication architecture.
FIG. 4 is a flowchart depicting a method for aircraft to airport laser communication.
FIG. 5 is a flowchart depicting a method for airport to aircraft laser communication.

### DETAILED DESCRIPTION

According to the techniques of this disclosure, a system for aircraft to airport laser communication can be used to transfer large amounts of data via a laser link, buffering, and short-term data storage. The system operates by collecting data throughout aircraft flight and taxi, establishing a laser link connection between an aircraft and an airport ground station, and transmitting the collected data through the laser link connection. Examples of large data that can be sent from the aircraft to the airport ground station include data suitable for machine learning applications. Further, data may be transmitted across the laser link from the airport ground station to the aircraft. Such data may include aircraft systems software updates, infotainment system content, or other related data. The speed of data transmission over the established laser link connection supports applications wherein transmitting large amounts of data at a high transfer rate is desirable.

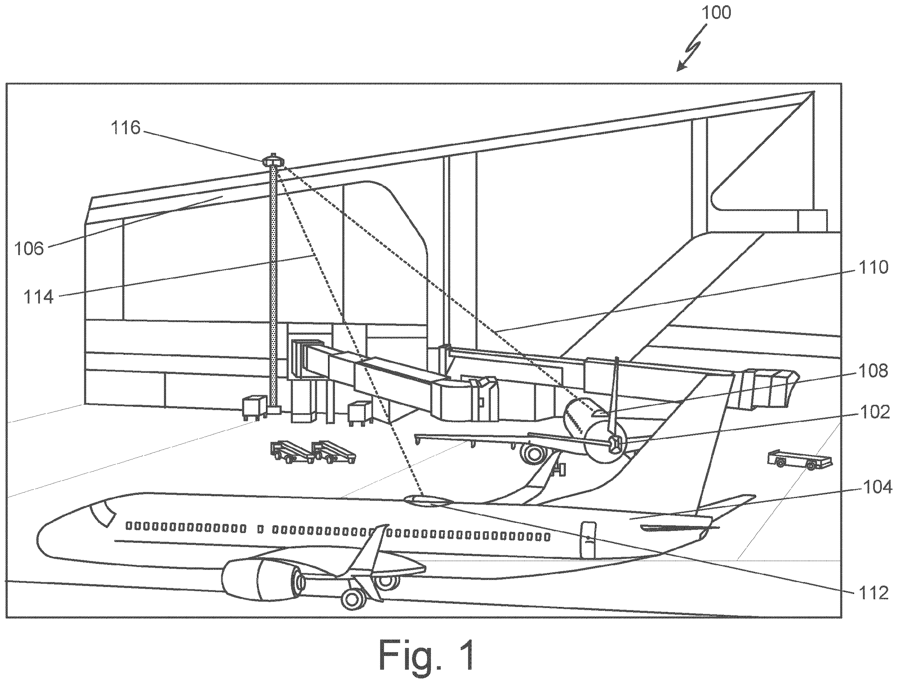

FIG. 1 is a perspective view of aircraft-to-airport communication system 100. Aircraft-to-airport communication system 100 includes first aircraft 102, second aircraft 104, and airport ground station 106. First aircraft 102 includes transceiver 108 mounted on an external body of first aircraft 102. Second aircraft 104 includes transceiver 112 mounted on an external body of second aircraft 104. Airport ground station 106 includes transceiver 116. Transceiver 108 of first aircraft 102 is optically connected to transceiver 116 of airport ground station 106 via laser link 110. Transceiver 112 of second aircraft 104 is optically connected to transceiver 116 of airport ground station 106 via laser link 114.

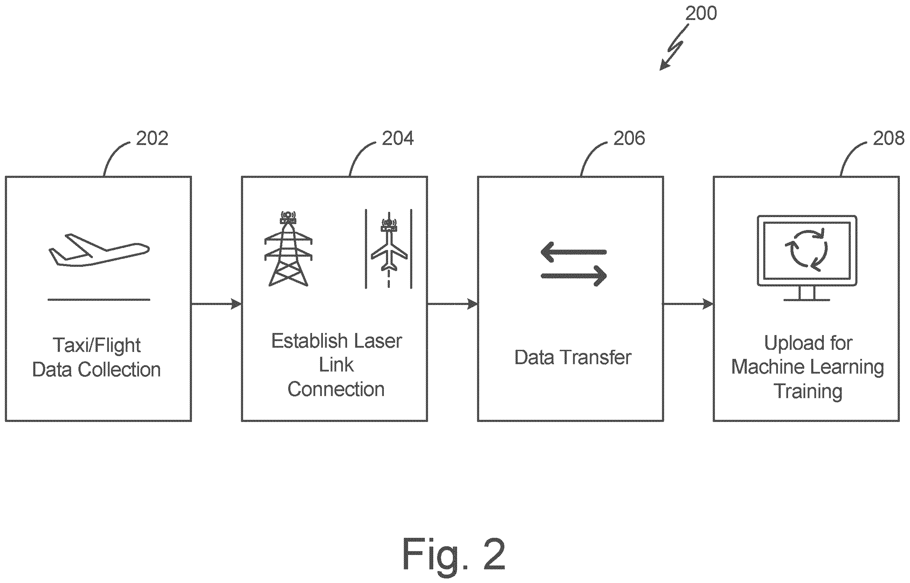

The operation of the components of FIG. 1 will be described with respect to the diagram depicting process 200 for collecting and transmitting data from an aircraft to an airport of FIG. 2. Process 200 includes step 202 of taxi and flight data collection, step 204 of establishing a laser link connection, step 206 of data transfer, and step 208 of uploading data to a network within airport ground station 106.

In operation, at step 202 of taxi and flight collection, first aircraft 102 collects data over the course of its operation, including during aircraft flight time and taxi. Such data can be collected by any variety of sensing devices configured to capture and record data. For example, the data can include video data, audio data, environmental parameter data, signal measurement, and/or aircraft parameter data. Upon collection, the data is stored within the short-term data storage (not pictured) on-board first aircraft 102.

After data collection, at step 204 of establishing a laser link connection, first aircraft 102 begins communication directly with airport ground station 106 when a line of sight is established between transceiver 108 of first aircraft 102 and transceiver 116 of airport ground station 106. In order to aid in establishing a line of sight, transceiver 108 can be mounted on the top side of an aircraft body as depicted in FIG. 1. Transceiver 116 can be mounted on an elevated surface of airport ground station 106 such that a line of sight is easily established with incoming or outgoing aircrafts. It is understood, however, that transceiver 108 can be mounted in any alternative position on aircraft 102, including other positions that may be more advantageous for establishing a line of sight with transceiver 116. Similarly, transceiver 116 can be mounted in any alternative position on airport ground station 106, including other positions that may be more advantageous for establishing a line of sight with transceiver 108. Further, any of transceiver 108, transceiver 112, and/or transceiver 116 can be housed in optical glass to protect against external damage, while maintaining the ability to establish a line of sight with other transceivers.

Step 204 of establishing a laser link connection continues upon establishing a line of sight between transceiver 108 and transceiver 116. After a line of sight is established, transceiver 108 initiates communication directly with transceiver 116. In some embodiments, transceiver 116 can initiate communication directly with transceiver 108. Communication between transceiver 108 and transceiver 116 is direct, meaning that there is no need for an external device, such as a satellite, in order to transmit and receive data over the laser connection. The initial communication between transceiver 108 and transceiver 116 can use a standard network specification (e.g., IEEE 802. 1 1b), including transmitting a destination address, a source address, and an acknowledgement return signal to establish a connection. Alternatively, other communication protocols could be used. Once a connection is established between transceiver 108 and transceiver 116, data transmission can begin.

Step 206 of process 200 includes data transmission between airport ground station 106 and first aircraft 102 occurs via laser link 110 between transceiver 108 and transceiver 116. Laser link 110 is an infrared laser connection which allows for high-speed data transfer between optical receivers (i.e. transceiver 108 and transceiver 116). Laser link 110 is configured to transmit data at a rate of at least 100 gigabits per second. Transceiver 108 and transceiver 116 are also configured to send and receive data at a rate of at least 100 gigabits per second. In embodiments where a standard networking specification such as IEEE 802.11b is used for data transmission, data can travel between the aforementioned transceivers at speeds up to 9.6 gigabits per second.

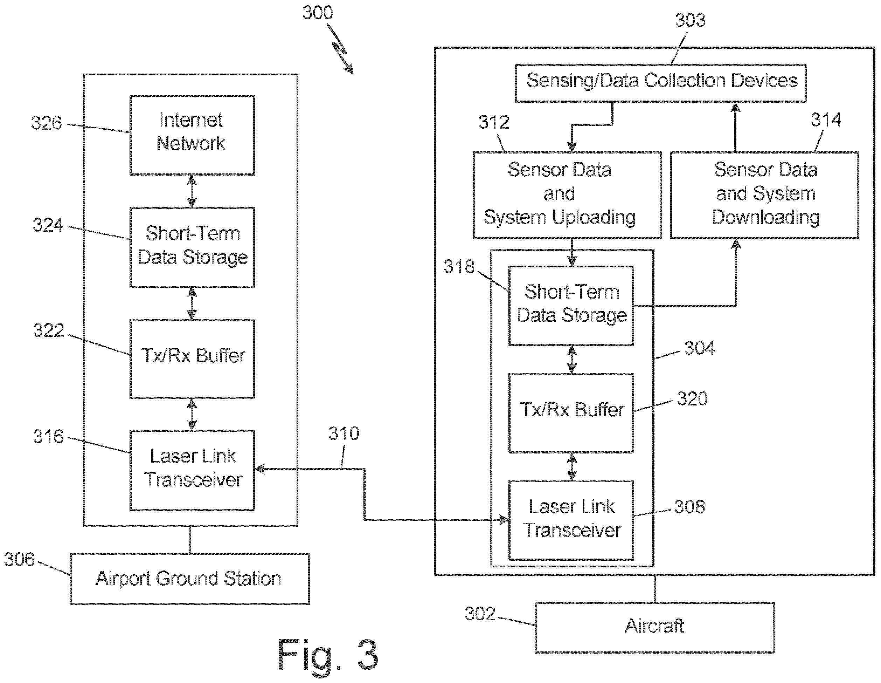

During data transmission from first aircraft 102 to airport ground station 106, data is transmitted from the short-term data storage (not pictured) on-board first aircraft 102 to a data buffer (not pictured) on-board first aircraft 102. Greater detail regarding the operation of short-term data storage and the data buffer will be disclosed in the description of FIG. 3. The data is then transmitted to transceiver 108 from the data buffer. Transceiver 108 transmits data via laser link 110, and the data is then received by transceiver 116. The data can then be transmitted via a data buffer (not pictured) within airport ground station 106 to a short-term data storage (not pictured), also housed within airport ground station 106. The data can then be transmitted to a network within airport ground station 106.

At step 208 of process 200, the data is uploaded to the network within airport ground station 106. The data can be used for any number of applications. The quantity of data and speed of transmission makes the data particularly useful for training data in machine learning models. For example, high-quality (e.g. 4K resolution) video data captured during taxi of aircraft 102 can be used as training data for a machine learning model relating to collision avoidance systems. In such a model, video data of taxiway signage and markings can be input as training data to train a machine learning model to recognize various signage and markings. The output of such a machine learning model can be an alert system by which an aircraft operator is alerted to various signage and markings along an aircraft taxiway.

In another example, audio data collected from a cockpit of aircraft 102 during flight time can be used as training data for a machine learning model relating to audio transcription. In such an example, a microphone may capture audio from a pilot during aircraft flight. Audio recordings from the microphone can be used as training data to train a machine learning model to transcribe the recorded audio. The output of such a machine learning model can be a text output of the pilot's transcribed communications.

In yet another example, aircraft temperature sensor data collected from aircraft deicers within aircraft 102 can be used as training data for a machine learning model relating to predicting peak ice accumulation times during aircraft flight. In such an example, the temperature sensors can be positioned near aircraft deicers. The temperature sensors can then collect data on temperature fluctuations during flight. The temperature sensor data can be used as training data to train a machine learning model to predict when aircraft deicers will be needed during flight. The output of such a machine learning model can be a graph depicting likely deicing times during a flight. The preceding examples are merely intended to be illustrative of the broad breadth of applications for which collected data can be used, and are intended to be non-limiting.

Data transmission can also take place in the opposite direction, i.e., from airport ground station 106 to first aircraft 102. In such an embodiment, data is prepared for transmission via the network within airport ground station 106. Such data can include software update data, aircraft infotainment system update data, or any other suitable data. The data is transmitted from the network within airport ground station 106, to the short-term data storage within airport ground station 106, and then to the data buffer within airport ground station 106. The data is transmitted from transceiver 116 of airport ground station 106 to transceiver 108 of first aircraft 102 via laser link 110. The data is then transmitted to the data buffer within first aircraft 102, and then to the short-term data storage within first aircraft 102. Finally, the data is received at an embedded system within first aircraft 102 and downloaded for its applicable use.

Second aircraft 104 communicates with airport ground station 106 in the same fashion as that of first aircraft 102. Second aircraft 104 uses transceiver 112 to communicate with transceiver 116 of airport ground station 106 via laser link 114. In some embodiments, transceiver 116 contains multiple communication channels, thereby allowing data transfer to occur from both first aircraft 102 and second aircraft 104 simultaneously. In other embodiments, communication is established with one aircraft at a time and a second aircraft begins data transmission after the first aircraft has completed transmission. In still other embodiments, airport ground station 106 contains multiple transceivers mounted at various locations such that multiple aircraft transceivers can connect to different available transceivers for data transfer.

System 100 provides the benefit of a high-speed communication link between an aircraft, such as first aircraft 102 and/or second aircraft 104, and airport ground station 106 using a laser link connection such as laser link 110 or laser link 114. The laser link communication is superior to 5G communication which may interfere with aircraft sensors or actuators (e.g. an altimeter), and 4G communication which may have slower transmission speeds than are desirable. Transmitting data at high speeds allows for a large volume of data to be transmitted in a relatively short amount of time. Doing so allows an aircraft to collect data during flight and quickly offload it to a ground station where it can be processed. This is particularly useful in machine learning applications wherein large volumes of training data are necessary to train machine learning models. The machine learning model benefits from the large volumes of training data because such large volumes of data increase the speed at which the machine learning model is trained and provide more data for adjusting the relative weighting of factors within an algorithm contained within the machine learning model. Thus, the asynchronous collection and transmission of large data volumes collected on an aircraft are beneficial to such machine learning models.

FIG. 3 is a block diagram depicting aircraft-to-airport laser communication architecture 300. Architecture 300 includes aircraft 302 and airport ground station 306, which are analogous to first aircraft 102 and ground station 106 of FIG. 1, respectively. Aircraft 302 includes sensing/data collection devices 303, embedded system 304, aircraft system uploading module 312 and aircraft system downloading module 314. Embedded system 304 includes aircraft short-term data storage 318, aircraft data buffer 320, and laser link transceiver 308. Embedded system 304 can also include one or more processors, a direct memory access controller, and additional networking peripherals. Airport ground station 306 includes laser link transceiver 316, ground station data buffer 322, ground station short-term data storage 324, and ground station network 326. Laser link transceiver 308 is optically connected to laser link transceiver 316 by laser link 310. Laser link transceiver 308, laser link transceiver 316, and laser link 322 of architecture 300 are analogous to transceiver 108, transceiver 116, and laser link 110 of FIG. 1, respectively.

Sensing/data collection devices 303 are operably connected to aircraft system uploading module 312 and aircraft system downloading module 314 respectively. Aircraft system uploading module 312 is operably connected to aircraft short-term data storage 318 within embedded system 304 such that aircraft system uploading module 312 can transmit data to aircraft short-term data storage 318. Aircraft system downloading module 314 is operably connected to aircraft short-term data storage 318 within embedded system 304 such that aircraft system downloading module 314 can receive data from aircraft short-term data storage 318. Aircraft short-term data storage 318 is operably connected to aircraft data buffer 320. Laser link transceiver 308 is operably connected to aircraft data buffer 320.

Embedded system 304 can further include one or more processors, a controller, and additional networking peripherals. In one embodiment, the controller is a direct memory access (DMA) controller. In such an embodiment the DMA controller, the one or more processors, the aircraft short-term data storage, and the additional networking peripherals are operably connected via a data bus. The DMA controller is also operably connected to aircraft data buffer 320. The DMA controller facilitates the data transfer between aircraft short-term data storage 318 and aircraft data buffer 320. Such a configuration allows for higher transfer speeds as the one or more processors are not burdened with data transfer responsibilities, and instead the dedicated DMA controller facilitates the data transfer.

Laser link 310 communicatively connects aircraft 302 to airport ground station 306 by optically coupling laser link transceiver 308 to laser link transceiver 316. Within airport ground station 306, laser link transceiver 316 is operably connected to ground station data buffer 322. Ground station data buffer 322 is operably connected to ground station short-term data storage 324. Ground station short-term data storage 324 is operably connected to airport network 326.

In operation, aircraft-to-airport laser communication architecture 300 begins operation when aircraft 302 is operational. Aircraft 302 includes a variety of sensors and data collection devices represented by sensing/data collection devices 303. Such sensors or devices can include, but are not limited to: video recording devices, audio recording devices, environmental parameter sensors, signal measurement sensors, and/or aircraft parameter sensors. Sensing/data collection devices 303 can record and measure data from the time which aircraft 302 is operational, up until the time data is transmitted from aircraft 302 to airport ground station 306.

Sensing/data collection devices 303 transmit the sensed data to aircraft short-term data storage 318 within embedded system 304 via aircraft system uploading module 312. Aircraft short-term data storage 318 can be any storage system capable of data storage on-board aircraft 302. In some embodiments, aircraft short-term data storage 318 is a solid-state drive which uses flash memory to store data. Using a solid-state drive has the advantage of heightened resistance to aircraft turbulence due to the lack of physical disks for writing data. Thus, movement within the aircraft is less likely to result in loss of data integrity. In other embodiments, aircraft short-term data storage 318 can be a hard disk drive, which stores and receives data using magnetic storage. In still other embodiments, aircraft short-term data storage 318 can be a combination of one or more solid-state drives and one or more hard disk drives.

Aircraft short-term data storage 318 transmits the data stored therein to aircraft data buffer 320. Aircraft data buffer 320 can include one or more addressable memory devices, such as random-access memory (RAM) components. Aircraft data buffer can operate using a FIFO organization structure. Thus, data can be received from aircraft-short term data storage 318, then transmitted to laser link transceiver 308 on a first in, first out basis. This allows for simultaneous reading (i.e. receiving data from aircraft short-term data storage 318) and writing (i.e. transmitting data to laser link transceiver 308) within aircraft data buffer 320. Other arrangements are possible in other alternative embodiments.

Aircraft data buffer 320 transmits the data to laser link transceiver 308. Laser link transceiver 308 is an optical device configured to establish a connection with another optical device, such as laser link transceiver 316, for the transmission and receipt of data. In one embodiment, laser link transceiver 308 is configured to establish a connection with laser link transceiver 316 using a standard network specification (e.g., IEEE 802.1 1b), including transmitting a destination address, a source address, and an acknowledgement return signal to establish a connection. Alternatively, other communication protocols could be used. Once a connection is established between laser link transceiver 308 and laser link transceiver 316, laser link 310 can be established.

Laser link 310 is a direct optical laser connection between two optical transceivers, namely laser link transceiver 308 and laser link transceiver 316. In some embodiments, laser link 310 is an infrared band connection over which data transmission can take place. Data transmission takes place directly from laser link transceiver 308 to laser link transceiver 316. Thus, there is no need for an additional device, such as a satellite, to facilitate communication between laser link transceiver 308 and laser link transceiver 316. In some embodiments, laser link 310 requires a line of sight between laser link transceiver 308 and laser link transceiver 316. Thus, interference in the form of physical structures blocking the line of sight can hinder the transmission of data over laser link 310. In some embodiments, data transmission over laser link 310 can be at speeds of at least 100 gigabits per second and can reach speeds up to or greater than 200 gigabits per second. In embodiments where a standard networking specification such as IEEE 802.11b is used for data transmission, data can travel at speeds up to 9.6 gigabits per second.

Data received at laser link transceiver 316 is then transmitted to ground data buffer 322. Ground data buffer 322 is a data buffer similar to aircraft data buffer 320 with respect to its features and function. Ground data buffer 322 transmits the data to ground short-term data storage 324. As described with respect to aircraft data buffer 320, ground data buffer 322 can operate as a FIFO buffer wherein data is received and transmitted simultaneously on a first in, first out basis. Other arrangements are possible in other alternative embodiments. Ground short-term data storage 324 is a storage device similar to aircraft short-term data storage 318. As described with respect to aircraft short-term data storage 318, ground short-term data storage 324 can be a solid-state drive, a hard disk drive, or any combination thereof.

The data is then transmitted to airport network 326. Airport network 326 can include any number of interconnected computing devices or nodes that can exchange data and resources. The data received from aircraft 302 can be used for any suitable application within airport network 326 or can be transmitted by airport network 326 to an external entity. Within airport network 326, the data can be used as training data for machine learning models. The training data can be used for the examples listed above in the description of FIG. 1. Again, such examples are merely intended to be illustrative and non-limiting.

Data transmission can also occur from airport ground station 306 to aircraft 302. In such an embodiment, data is prepared for transmission via airport network 326. Such data can include software update data, aircraft infotainment system update data, or any other suitable data. The data is transmitted from airport network 326 to ground short-term data storage 324. The data is then transmitted from ground short-term data storage 324 to ground data buffer 322. The data is then transmitted from ground data buffer 322 to laser link transceiver 316. Upon establishing a line-of-sight connection with laser link transceiver 308, the data is transmitted over laser link 310 from laser link transceiver 316 to laser link transceiver 308. The data is then transmitted from laser link transceiver 308 to aircraft data buffer 320. The data is then transmitted from aircraft data buffer 320 to aircraft short-term data storage 318. The data is then received at aircraft system downloading module 314 and downloaded within aircraft 302 for its applicable use. aircraft system downloading module 314 can be connected to an on-board aircraft network within aircraft 302 where such data is used.

Architecture 300 provides many similar benefits to those described with respect to system 100 in the description of FIG. 1. Namely, architecture 300 provides the benefit of high-speed data transmission from aircraft 302 to airport ground station 306, as well as high-speed data transmission in the opposite direction from airport ground station 306 to aircraft 302. Furthermore, architecture 300 depicts aircraft short-term data storage 318 within aircraft 302. Such a configuration is beneficial in that it can record data asynchronous to the transmission of such data. Thus, sensing/data collection devices 303 can operate while aircraft 302 is in flight or otherwise restricted from establishing a line of site with laser link transceiver 316, and data can be amassed for bulk transmission at a later time. Additionally, the integration of a DMA controller allows for fast data transfer speeds as the one or more processors within embedded system 304 are not burdened with the data transfer. Further, architecture 300 depicts a direct link between aircraft 302 and airport ground station 306 via laser link 310. There is no need to add a satellite communication component, thereby reducing the cost and complexity of the technology. In addition, the short connection distance between aircraft 302 and airport ground station 306 may lead to the avoidance of International Traffic in Arms Regulations (ITAR) export restrictions.

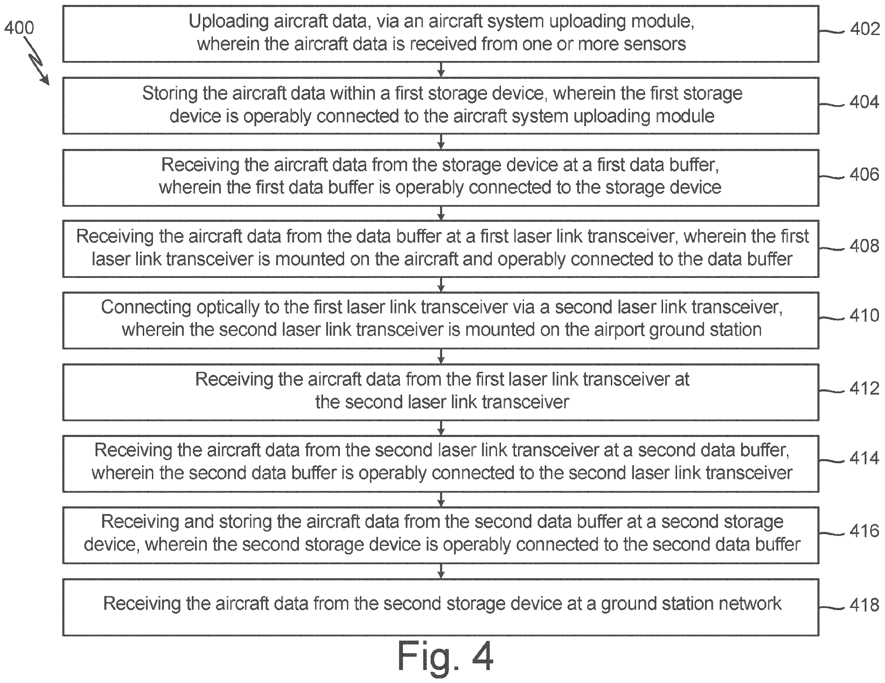

FIG. 4 depicts aircraft to airport laser communication method 400. For the purposes of illustration, reference will be made to parts contained within aircraft-to-airport laser communication architecture 300 of FIG. 3.

Method 400 begins at step 402, wherein aircraft system uploading module 312 uploads aircraft data received from sensing/data collection devices 303. The aircraft data can include video data, audio data, environmental parameter data, and/or aircraft parameter data. At step 404, aircraft short-term data storage 318 within embedded system 304 receives and stores the aircraft data uploaded by aircraft system uploading module 312. At step 406, aircraft data buffer 320 receives the aircraft data from aircraft short-term data storage 318. At step 408 laser link transceiver 308 receives the aircraft data from aircraft data buffer 320.

At step 410, laser link transceiver 308 optically connects to laser link transceiver 316. Such a connection can be, for example, laser link connection 310. In some embodiments, laser link connection 310 is established only when a line of sight is available between laser link transceiver 308 and laser link transceiver 316. At step 412, laser link transceiver 316 receives the aircraft data from laser link transceiver 308 via laser link 310. Laser link 310 can be on an infrared wavelength. In other embodiments, wavelengths other than infrared wavelengths can also be used for laser link 310.

At step 414, ground data buffer 322 receives the aircraft data from laser link transceiver 316. At step 416, ground short-term data storage 324 receives the aircraft data from ground data buffer 322 and stores the aircraft data. At step 418, ground station network 326 receives the aircraft data from the ground short-term data storage 324. In some embodiments, ground station network 326 includes or is operably connected to one or more machine learning models. The received aircraft data can then be used as training data for the one or more machine learning models.

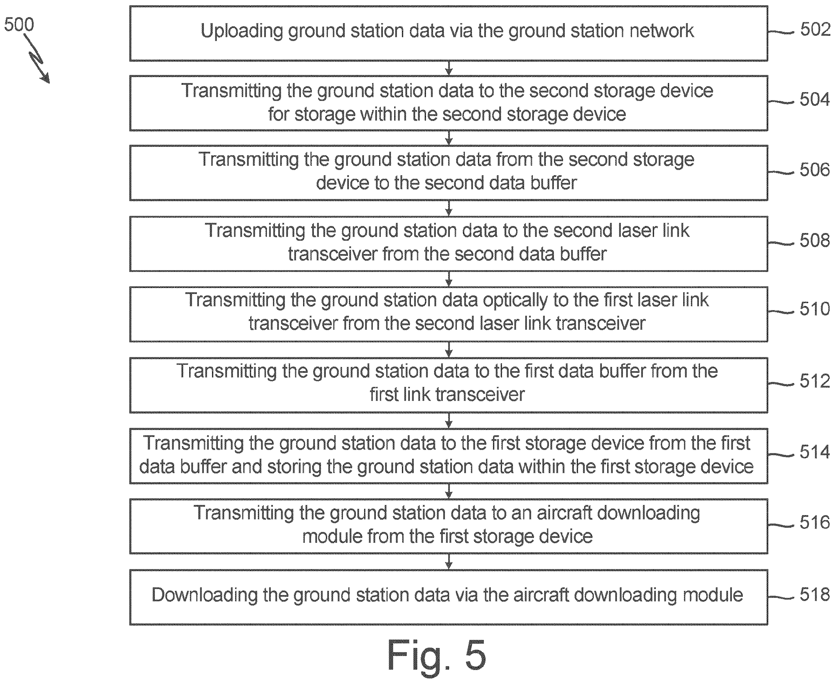

FIG. 5 depicts airport to aircraft laser communication method 500. For the purposes of illustration, reference will be made to parts contained within aircraft-to-airport laser communication architecture 300 of FIG. 3.

Method 500 begins at step 502, wherein ground station network 326 uploads ground station data. Ground station data can include aircraft software updates, aircraft infotainment system updates, aircraft parameter information, and/or environmental parameter information. Ground station data can be generated within ground station network 326 or can be received from an external entity. At step 504 ground station network transmits the ground station data to ground short-term data storage 324. At step 506, aircraft short-term data storage 318 transmits ground station data to ground data buffer 320. At step 508, ground data buffer 320 transmits ground station data to laser link transceiver 316.

At step 510, laser link transceiver 316 optically transmits the ground station data to laser link transceiver 308. Such transmission can be done via laser link connection 310. In some embodiments, laser link connection 310 is established when a line of sight is available between laser link transceiver 316 and laser link transceiver 308.

At step 512, laser link transceiver 308 transmits ground station data to aircraft data buffer 320. At step 514, aircraft data buffer 320 transmits ground station data to aircraft short-term data storage 318 wherein ground station data is stored. At step 516, aircraft short-term data storage 318 transmits the ground station data to aircraft system downloading module 314. At step 518, the ground station data is downloaded to the aircraft via aircraft system downloading module 314. The ground station data can then be used by the appropriate systems on-board aircraft 302.

Method 400 and method 500 provide methods for transmission and receipt of large quantities of data between an aircraft and a ground system. According to the described methods, data can be collected asynchronously and transmitted over an infrared wavelength. The data can be transmitted at high speeds, thereby decreasing the time needed for communication and transmission. The data can also be transmitted over wireless links, thereby removing the need for any physical connections to the aircraft. Further, the transmission of data via the described laser link does not interfere with the radio frequency spectrum. Thus, the techniques of this disclosure allow for direct, fast and efficient bulk data communication.

While the invention has been described with reference to an exemplary embodiment(s), it will be understood by those skilled in the art that various changes may be made without departing from the scope of the invention as defined by the claims. In addition, many modifications may be made to adapt a particular situation or material to the teachings of the invention without departing from the scope of the claims. Therefore, it is intended that the invention not be limited to the particular embodiment(s) disclosed, but that the invention will include all embodiments falling within the scope of the appended claims.

## Claims

1. A system for laser communication between an aircraft and an airport ground station, the system comprising:
one or more data collection devices (303), the one or more data collection devices configured to collect aircraft data;
an embedded system (304) within the aircraft, the embedded system comprising:
one or more processors;
a first storage device (318), the first storage device operably connected to the one or more processors, wherein the first storage device is configured to store the aircraft data received from the one or more data collection devices;
a first data buffer (320), the first data buffer operably connected to the storage device, wherein the first data buffer is configured to receive the aircraft data from the storage device; and
a first laser link transceiver (308) mounted on the aircraft and operably connected to the data buffer, wherein the first laser link transceiver is configured to receive the aircraft data from the data buffer;
a second laser link transceiver (316) mounted on the airport ground station (306), wherein the second laser link transceiver is configured to optically connect directly to the first laser link transceiver and receive the aircraft data therefrom.

2. The system of claim 1, further comprising:
a second data buffer (322) operably connected to the second laser link transceiver, wherein the second data buffer is configured to receive the aircraft data from the second laser link transceiver; and
a second storage device (324) operably connected to the second data buffer, wherein the second storage device is configured to receive the aircraft data from the second data buffer, and wherein the second storage device is configured to store the aircraft data.

3. The system of claim 2, further comprising:
a ground station network (326), wherein the ground station network is configured to receive the aircraft data from the second storage device, and optionally wherein:
the ground station network is further configured to upload ground station data and transmit the ground station data to the second storage device for storage;
the second storage device is further configured to store the ground station data and transmit the ground station data to the second data buffer;
the second data buffer is further configured to transmit the ground station data to the second laser link transceiver;
the second laser link transceiver is further configured to wirelessly transmit the ground station data to the first laser link transceiver;
the first laser link transceiver is further configured to transmit the ground station data to the first data buffer;
the first data buffer is further configured to transmit the ground station data to the first storage device;
the first storage device is further configured to store the ground station data and to
transmit the ground station data to an aircraft downloading module; and the aircraft downloading module is further configured to download the ground
station data.

4. The system of claim 3, wherein the ground station data comprises aircraft software updates, aircraft infotainment system updates, aircraft parameter information, and/or environmental parameter information, and/or wherein the ground station data comprises data to configure devices connected to the aircraft.

5. The system of claim 3, wherein the ground station network (326) comprises or is operably connected to one or more machine learning models, and wherein the aircraft data is used as training data for the one or more machine learning models.

6. The system of claim 2, wherein the first storage device and the second storage device are solid state drives.

7. The system of any preceding claim, wherein the embedded system further comprises a controller, wherein:
the controller is operably connected to the first storage device and to the one or more processors via a data bus;
the controller is operably connected to the first data buffer; and
the controller is configured to transfer data between the first storage device and the first data buffer.

8. The system of any preceding claim, wherein the aircraft data includes video data, audio data, environmental parameter data, and/or aircraft parameter data, and optionally wherein the aircraft data is collected during aircraft flight time and/or aircraft taxi.

9. The system of any preceding claim, wherein communication between the first laser link transceiver (308) and the second laser link transceiver (316) occurs at a rate of at least 100 gigabits per second.

10. The system of any preceding claim, wherein the first laser link transceiver (308) is encased in an optical protector.

11. The system of any preceding claim, wherein communication between the first laser link transceiver and the second laser link transceiver is established only when a line of sight between the first laser link transceiver and the second laser link transceiver is established.

12. A method of laser communication between an aircraft and an airport ground station, the method comprising:
uploading aircraft data via an aircraft uploading module, wherein the aircraft data is generated by one or more sensors or by one or more recording devices;
storing the aircraft data within a first storage device (318) within the aircraft, wherein the first storage device is operably connected to the aircraft uploading module;
receiving the aircraft data from the storage device at a first data buffer (320) within the aircraft, wherein the first data buffer is operably connected to the storage device;
receiving the aircraft data from the data buffer at a first laser link transceiver (308), wherein the first laser link transceiver is mounted on the aircraft and operably connected to the data buffer;
connecting optically to the first laser link transceiver via a second laser link transceiver (316), wherein the second laser link transceiver is mounted on the airport ground station; and
receiving the aircraft data from the first laser link transceiver at the second laser link transceiver.

13. The method of claim 12, further comprising:
receiving the aircraft data from a second laser link transceiver at a second data buffer (322), wherein the second data buffer is operably connected to the second laser link transceiver;
receiving the aircraft data from the second data buffer at a second storage device (324), wherein the second storage device is operably connected to the second data buffer; and
storing the aircraft data within the second storage device.

14. The method of claim 13, further comprising:
receiving the aircraft data from the second storage device at a ground station network, and optionally further comprising:
uploading ground station data via the ground station network;
transmitting the ground station data to the second storage device for storage;
storing the ground station data within the second storage device;
transmitting the ground station data from the second storage device to the second data buffer;
transmitting the ground station data to the second laser link transceiver from the second data buffer;
transmitting the ground station data wirelessly to the first laser link transceiver from the second laser link transceiver;
transmitting the ground station data to the first data buffer from the first laser link transceiver;
transmitting the ground station data to the first storage device from the first data buffer;
storing the ground station data within the first storage device;
transmitting the ground station data to an aircraft downloading module from the first storage device; and
downloading the ground station data via the aircraft downloading module.

15. The method of claim 14, wherein the ground station data includes aircraft software updates, aircraft infotainment system updates, aircraft parameter information, and/or environmental parameter information and/or wherein the ground station network comprises one or more machine learning models and wherein the aircraft data is used as training data for the one or more machine learning models.
